# EUROPEAN PATENT APPLICATION

(11) **EP 1 970 521 A2**
(43) Date of publication of application: **17.09.2008**
(21) Application number: 08004402.7
(22) Date of filing: 10.03.2008
(51) Int. Cl.: E05F 15/20

(54) **Operating method of a motorised door, gate and barrier system**

(30) Priority: 12.03.2007 IT VI20070071
(71) Applicant: BFT SpA, 36015 Schio (VI) (IT)
(72) Inventor: Billo, Fabio, Ing., 36031 Dueville (VI) (IT); Sprea, Renato, Ing., 36075 Montecchio Magggiore (VI) (IT)
(74) Representative: Bettello, Pietro

(57) **Abstract**

The invention concerns an operating method of a motorised door, gate and barrier system, which includes a moving element (5) operable through an actuator (2) and a portable remote control device (4), whose switching from control mode to adjustment mode allows carrying out the modification of the value of one or more operating parameters of the system, said value being modifiable within a discrete set of values. Said value is thus sent to a reception device connected to the system's control unit and displayed by a device (8) integrated in said control unit (6).

## Description

The invention concerns the operating modes of motorised opening and closing systems inside or outside buildings, referring in particular to doors, gates and barriers.

These systems normally provide fixed or portable control systems and actuators which allow them to perform the opening and closing movements of the mentioned elements.

The control systems may feature various types of user interface and they allow them to send commands to the actuator.

In particular, the interface may comprise control push-buttons which allow for the start, shutdown or stop of the guided element's movement. This is possible through the transmission of a signal sent by the control system to the control unit of the motorisation system.

The commands may be transmitted in various modes, via cable, or without connection cables, for example through sending a radio wave signal.

For the operation of these systems, a receiving unit is also necessary for the reception and verification of the radio signal sent by the control system.

The receiving unit is connected to or integrated in the control unit, which comprises a logical unit for the management of the signals sent by the receiver, the system's operating parameters, besides the transmission and adjustment of the power necessary to the movement of the guided element's actuator.

The control unit also comprises a memory unit for the registration of the system's operating parameters, said parameters being adjustable based on the operating mode wanted for the system.

In particular, the adjustment parameters may concern the system's operating logic, where logic is intended as the behaviour of the system upon the sending of a signal by the control system.

For example, it may be desirable for the user that, during the closing manoeuvre, the sending of a radio pulse result in the blocking of the manoeuvre itself, or on the contrary in the immediate inversion of the movement direction in the door's closing direction.

Another example of operating logic parameter may be the fact that the implementation system, with the door fully open, after a predefined time period has elapsed, performs the closing manoeuvre without the user himself to send the command.

The time period necessary to perform the closing may be set within a predefined interval of values.

Several adjustment parameters are necessary to set the initial and final positions of the manoeuvre carried out by the guided door, or to define the actuator's sensitivity to obstacles.

The programming mode normally available for these systems provides for the setting of said parameters through the use of configuration methods which use means such potentiometer resistors, switches, jumpers, push-buttons that are positioned on the control unit and that must be adjusted by therefore having access to the control unit itself. This setting mode does.not allow for the real-time display and verification of the set parameters. A development of the programming mode described consists in applying to the control unit a display means or a display for the alphanumeric or graphic character display of the parameter to be set and the values associated with it. The setting of the display values is possible through the adjustment of the above-described means present on the control unit, which, once actuated according to a predefined sequence or combination, allow for the setting of the parameters described. This programming mode features the following disadvantages:
- necessity of physical access to the control unit by the operator who is performing the settings described for the adjustment of the parameters;
- the control unit must also simultaneously be maintained at supply voltage, in order to be able to display in real time the values of the parameters set on the control unit;
- a few parameter settings are easier if the operator is able to come closer to the guided part during its manoeuvre, For example, in the case of the memorisation of stopper positions, it is useful for the programming to be implemented by coming closer to the manoeuvred part, in order to carry out a precise adjustment of the manoeuvre itself. On the other hand, the control unit may be positioned far away from the guided door; therefore in this case it becomes difficult, if not impossible, to perform simultaneous adjustment by actuating the push-buttons of the controller and verifying the position of the guided part.

The aim of the present invention is to come up with an operating method of a motorised door, gate and barrier system able to overcome the drawbacks described above.

The invention allows solving the problems just described, as the switching to programming mode of the radiofrequency transmission remote control allows to perform the entire parameter adjustment phase without having to physically actuate the adjustment means on board the control unit.

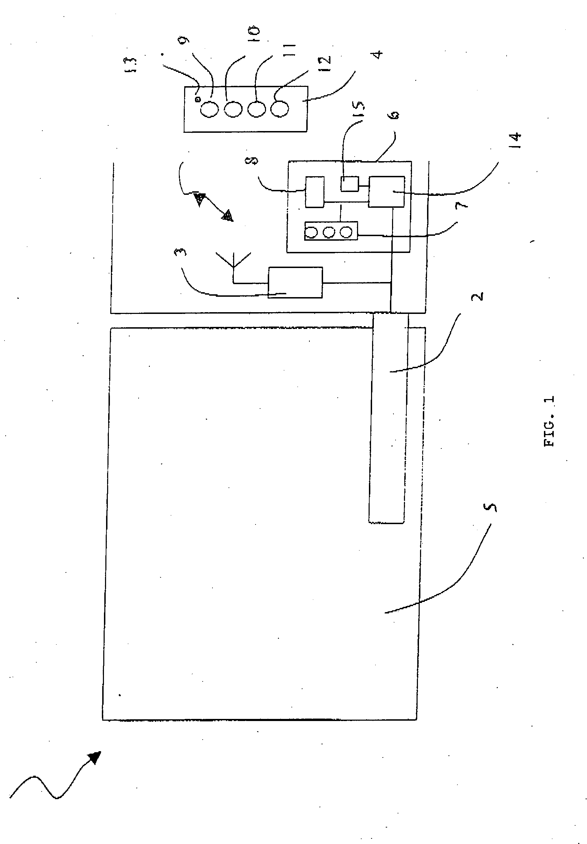

The present invention will now be illustrated and described, in some of its implementations, with the help of the appended drawing table, where: fig. 1 depicts a schematic diagram or an installation pertaining to the process of the invention.

According to the invention, under normal use conditions, the operator uses the advantageous radio-transmission remote control device 4, to transmit start and stop commands to the system's control unit; said operating mode may be switched to programming mode at any time.

As such, the operator, through the implementation according to a predetermined command sequence of the control device 4 of the door 5, may access the programming menu of the control unit 6 and set the operating parameters. The command sequence is sent to a receiver device 3. Said command sequence is such as to make unlikely an involuntary switching of the operating mode; in alternative, the device 4 may be equipped with a suitable push-button or switch 13 to unequivocally perform the switching operation of the operating mode.

At the same time, the adjustment push-buttons 7, on board the control unit 6, may be deactivated in terms of their function, in order to avoid the simultaneous transmission of commands with related conflicts in the system. The system for the display 8 of the programming state of the machine's operating parameters, whether a display or a series of indicator lights, serves as feedback to the user, informing him about the adjustments he is performing.

This system thus solves all the disadvantages highlighted above for currently commercially available systems,

For example, in order to avoid any contact between the operator and live parts, a usual solution is to insert insulating material protections inside the controller 6, which allows for implementing commands 7 by avoiding accidental contacts with said parts; this however increases complexity and costs.

The method described allows instead for the programming of the operating parameters, without having to directly actuate the push-buttons 7 of the controller, but by actuating the commands 9,10,11,12 in remote mode, eliminating the need for lids and protections,

There are numerous adjuslable setting parameters that concern the system's s operating mode, For example, it is possible to memorise the stopper positions of the opening and closing manoeuvre, or the duration of maintaining the door in opening position may be set: once the time set has elapsed, the closing manoeuvre begins in automatic mode. It is also possible to configure the operating logic, for example by disabling the automatic operation, or enabling the operation of an accessory. The parameter may thus be of various types, for example logical, numerical, or may be itself a command which launches a memorisation and automatic configuration procedure of a device.

The presence of more parameters makes the programming operation complex: it thus becomes necessary for the operator to verify the settings performed, before, after and during the configuration. For this reason, it is useful to have at disposal a system for the display and verification of the set parameters which may be made up, in the most simple cases, of a set of LEDs, whose combination or blinking sequence takes on a particular meaning, while in the most complex cases, it may be implemented through a display.

The use of a display device in combination with a remote system makes programming an easy operation by allowing for the display and confirmation of the parameters in real time and, in the case of a display, it allows for a particularly precise adjustment of the parameters.

## Claims

1. Operating method of a motorised system (1) for the movement of doors. gates and barriers with at least one mobile element (5) operable through an actuator (2), **characterised by** comprising;
(i) a control unit (6) comprising adjustment push-buttons or other elements of configuration (7) of the system's operating parameters (1), a device (8) for the display of the configuration performed, whether in alphanumerical or other-type characters;
(ii) an advantageous radio-transmission remote control device (4), which comprises control elements (9,10,11,12) to command the mobile element (5) and that, pushed in a determined combination or sequence, allow for switching the operating mode of said remote control device (4) from the control mode to the adjustment mode of the values of said operating parameters within a set of values, said values being memorised in a memory unit (15);
(iii) a receiver device (3) for the signal transmitted by the device (4) connected to or incorporated in the control unit (6).

2. Method, according to claim 1, **characterised in that**, in the operating mode of controlling the system (1), pressures on the manoeuvre elements (9,10,11,12) of the remote control device (4) are used to control the movements of the mobile element (5) and, in which, in the operating mode of adjusting the system (1) the execution of a combination or a predefined implementation sequence of said remote control push-bullons allows for memorising the value of the system's operating parameters.

3. Method, according to claim 2, **characterised in that** the hidden push-button (13), pressed in a determined sequence, allows for switching the operating mode of said remote control device (4) from the control mode to the adjustment mode of the system's operating parameters (1).

4. Method, according to claim 3, **characterised in that** the switching of the remote control device (4) from control mode to adjustment mode disables the functionality of the adjustment push-buttons (7) of the control unit (6) and the switching from programming mode to control mode of the device (4) enables the functionality of the adjustment push-buttons (7).

5. Method, according to claim 4, **characterised in that** the display device (8) is activated through a combination or sequence of pressures on the push-buttons (7) for the display of a parameter, for the display of the value associated with it, for the modification and memorisation of said value.

6. Method, according to claim 5, **characterised in that** it provides for a second operating mode of the system (1) wherein pressures exerted on said push-buttons (9, 10, 11, 12) of the remote control device (4) make sure that the values associated with the values of the parameter are increased/decreased for discrete values.

7. Method, according to claim 1, **characterised in that** the range of the signal of the radio-transmission remote control device (4) is reduced when the operation is switched from control mode to adjustment mode.

8. Method, according to claim 1, **characterised in that** the remote control device (4) is used to adjust the value of an operating parameter of the system, the value of this parameter being modifiable between a set of values, said device comprising hardware (6, 7, 8, 14,15) and software means.

9. Method, according to claim 1, **characterised in that** the configured and memorised parameters are made up of a sensitivity, a duration, an operating logic or a position of the mobile part (5).

10. Method, according to Claim 1, **characterised in that** operating access in programming mode of the remote control device (4) only occurs through an access key.

11. Method according to claim 1, **characterised in that** the selection of a parameter launches a procedure of automatic configuration of the system.

12. Method, according to claim 2, **characterised in that** the switching from the control mode to the programming mode only occurs through the implementation of the commands of the control unit (6).

13. Method, according to claim 1, **characterised in that** the switching from the control mode to the programming mode only occurs through the execution in succession, first of the implementation of the commands of the control unit (6) and, successively, through the implementation of the control elements (9, 10, 11, 12) in a determined sequence.

14. Method, according to claims 1 and 2, **characterised in that**, once the switching from the control mode to the programming mode has occurred, the first remote control device (13) activated in programming mode excludes any further remote control successively switched in programming mode from the programming operations.

15. Method, according to claim 1, **characterised in that**, once the switching from the control mode to the programming mode has occurred, a successive implementation combination of said commands of the remote control is susceptible of switching said remote control in the control mode.

16. Method, according to claim 1, **characterised in that**, once the switching from the control mode to the programming mode has occurred, and once a predefined time interval has elapsed, said commands of the remote control are susceptible of switching said remote control in the control mode without any operator's action.
